# EUROPEAN PATENT APPLICATION

(11) **EP 1 653 611 A1**
(43) Date of publication of application: **03.05.2006**
(21) Application number: 05007471.5
(22) Date of filing: 05.04.2005
(51) Int. Cl.: H03H 7/38, H04B 1/38, H04B 1/18, H01Q 1/24

(54) **Apparatus and method for matching an antenna of a mobile communication terminal**

(30) Priority: 26.10.2004 KR 2004085930
(71) Applicant: LG ELECTRONICS INC., Seoul (KR)
(72) Inventor: Cho, Bag-Gi, Sungnam Gyeonggi-Do (KR)
(74) Representative: von Hellfeld, Axel

(57) **Abstract**

An apparatus for matching an antenna of a mobile communication terminal is disclosed. The apparatus comprises antenna matching units for connecting to the antenna, and a path controller connecting at least one of the antenna matching units between the antenna and an internal circuit unit for measuring power emission values of the antenna with the at least one of the antenna matching units. The path controller selects from the at least one of the antenna matching units for connecting to the antenna based on an optimal power emission value of the measured power emission values for matching the antenna.

## Description

### BACKGROUND OF THE INVENTION

### Field of the Invention

The present invention relates to a mobile communication terminal, and more particularly, to an apparatus and method for matching an antenna to optimize emission performance of the mobile communication terminal.

### Description of the Related Art

A mobile communication terminal communicates a signal from one user utilizing a wireless page, transmitted through a mobile switching center (MSC), to another user. A base station (BS) monitors a user's movement through a mobile service area. A conventional mobile communication terminal includes an antenna for transmitting and/or receiving signals.

Research is ongoing to improve sensitivity of an antenna within a noisy environment. The noisy environment may be result from noise generated from electronic devices and other obstacles, such as buildings, within a communication path. A matching network for an antenna is a crucial component for providing a high quality signal for reception by a user.

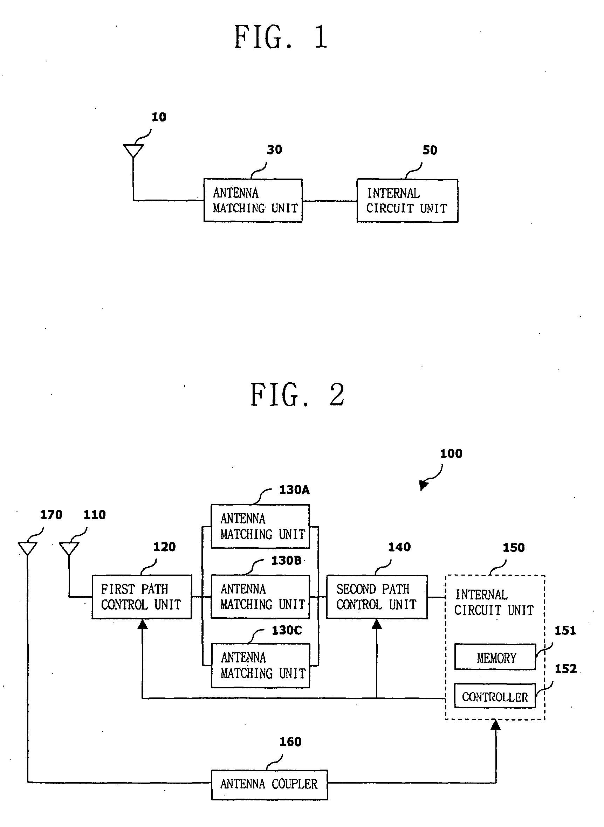

A conventional apparatus for matching an antenna of a mobile communication terminal is disclosed in Fig. 1. The conventional apparatus 1 for matching an antenna of a mobile communication terminal comprises an antenna 10 for transmitting and/or receiving a signal, an antenna matching unit 30 connected to the antenna 10, and a circuit unit 50 connected to the antenna matching unit 30.

The antenna matching unit 30 matches the antenna 10 for a single condition. The antenna matching unit 30, in one example, is implemented for the single condition that users are not holding the mobile terminal. In another example, the antenna matching unit 30 is implemented for the single condition that users position the mobile terminal using one hand proximal to an ear. If the antenna matching unit 30 is implemented for situations other than the single condition, a large voltage standing wave ratio (VSWR) will appear at the antenna 10. The large voltage standing wave ratio results in received signals having a weak electric field strength. The mobile terminal is required to increase power consumption of a battery supply to compensate for the weak electric field strength. The increased power consumption results in decreased talk time for the mobile terminal.

Therefore, there is a need for a system that overcomes the above problems and provides advantages over other signal matching systems.

### SUMMARY OF THE INVENTION

Features and advantages of the invention will be set forth in the description which follows, and in part will be apparent from the description, or may be learned by practice of the invention. The objectives and other advantages of the invention will be realized and attained by the structure particularly pointed out in the written description and claims hereof as well as the appended drawings.

In one embodiment, an apparatus comprises antenna matching units for connecting to the antenna, and a path controller connecting at least one of the antenna matching units between the antenna and an internal circuit unit for measuring power emission values of the antenna with the at least one of the antenna matching units. The path controller selects, in one example, from the at least one of the antenna matching units for connecting to the antenna based on an optimal power emission value of the measured power emission values for matching the antenna.

In another embodiment, a method comprises measuring power emission values of the antenna to which at least one of antenna matching units has been connected, storing the measured power emission values, comparing the stored measured power emission values relative to each other for determining at least one optimal antenna matching unit based on an optimal power emission value of the measured power emission values, and connecting the at least one optimal antenna matching unit between the antenna and an internal circuit unit. The optimal power emission value preferably is the greatest power emission value of the antenna. In the alternative, the optimal power emission value may be a user defined criteria.

Additional features and advantages of the invention will be set forth in the description which follows, and in part will be apparent from the description, or may be learned by practice of the invention. It is to be understood that both the foregoing general description and the following detailed description of the present invention are exemplary and explanatory and are intended to provide further explanation of the invention as claimed.

These and other embodiments will also become readily apparent to those skilled in the art from the following detailed description of the embodiments having reference to the attached figures, the invention not being limited to any particular embodiments disclosed.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

Features, elements, and aspects of the invention that are referenced by the same numerals in different figures represent the same, equivalent, or similar features, elements, or aspects in accordance with one or more embodiments.

The invention will be described in detail with reference to the following drawings in which like reference numerals refer to like elements wherein:
Fig. 1 is a block diagram showing a conventional apparatus for matching an antenna of a mobile communication terminal.
Fig. 2 is a block diagram showing an apparatus for matching an antenna of a mobile communication terminal in accordance with a preferred embodiment of the present invention.
Fig. 3 is a flow chart of a method for matching an antenna of a mobile communication terminal in accordance with the preferred embodiment of the present invention.

### DETAILED DESCRIPTION OF THE PREFERRED EMBODIMENTS

The invention relates to an apparatus and method for matching an antenna of the mobile communication terminal for optimizing emission performance of the antenna.

Although the invention is illustrated with respect to a mobile terminal, it is contemplated that the invention may be utilized anywhere it is desired for efficiently transmit and receive signals. Reference will now be made in detail to the preferred embodiments of the present invention, examples of which are illustrated in the accompanying drawings. Preferred embodiments of the present invention will now be described with reference to the accompanying drawings.

The invention provides an apparatus for selection of antenna matching units wherein at least one antenna matching unit is selectively connected to an antenna and the internal circuit unit of the mobile communication terminal. The invention further provides for the antenna being optimally matched according to a selected condition of the mobile communication terminal for optimizing the emission performance of the antenna.

Fig. 2 is a block diagram showing an apparatus 100 for matching an antenna of a mobile communication terminal in accordance with a preferred embodiment of the present invention. An antenna 110 transmits and/or receives a signal. First and second path controllers 120 and 140 respectively selectively connect one of the antenna matching units 130A, 130B, and 130C to the antenna 110 and to an internal circuit unit 150. An antenna coupler 160 measures power emission values of the antenna 110 utilizing, for example, the selected antenna such as matching units 130A, 130B, and/or 130C. The antenna coupler 160 outputs measured power emission values to an internal circuit unit 150. The internal circuit unit 150 has a memory 151 and a controller 152. The memory 151 stores the outputted power emission values. The controller 152 outputs a control signal to the first and second path controllers 120 and 140 based on the stored power emission values which selects from, in this exemplary example, any of the antenna matching units 130A, 130B, and 130C. The selection is preferably made for optimizing the antenna 110 emission performance. The selected antenna matching units are connected in the apparatus 100.

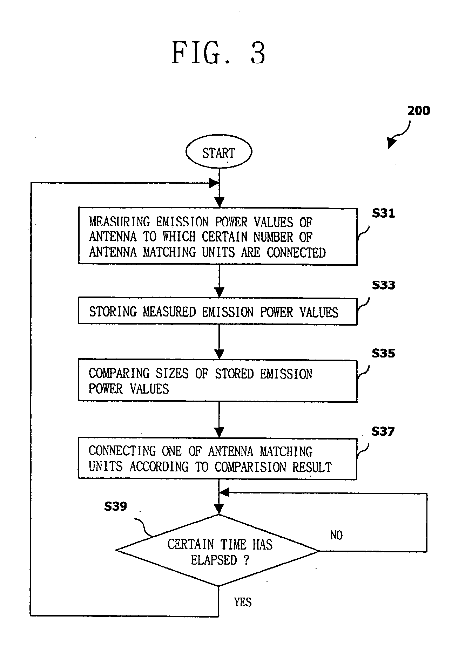

Fig. 3 is a flow chart 200 for matching an antenna of a mobile communication terminal 100 in accordance with the preferred embodiment of the present invention as described in Fig. 2. The method sequentially measures power emission values of the antenna from antenna matching units connected between the antenna and the internal circuit unit (S31). The sequentially measured power emission values are stored in memory (S33). The stored power emission values are compared to each other (S35). Antenna matching units are selectively connected between the antenna and an internal circuit unit based on a result of the comparison (S37). The method checks whether a selected time has elapsed since the antenna matching units are connected (S39).

The following is one exemplary example of the flow chart for Fig. 3. In this exemplary example, the controller 152 sequentially connects selected antenna matching units 130A, 130B, and 130C to the antenna 110 and to the internal circuit unit 150. The antenna coupler 160 sequentially measures the power emission values of the antenna 110 connected to the antenna matching units 130 (S31). The antenna coupler 160 outputs the measured power emission values to memory 151 (S33).

Preferably, the selected number of the antenna matching units is set to two or greater. The selected antenna matching units are preferably implemented in consideration of various situations at the initial stage of designing a mobile communication terminal. The selected antenna matching units are chosen for setting the voltage standing wave ratio (VSWR) values of the antenna within an ideal range under selected circumstances.

The controller 152 sets index values of the selected antenna matching units 130A, 130B, and 130C. The controller 152 stores set index values of the antenna matching units 130A, 130B, and 130C and power emission values corresponding to the antenna matching units 130A, 130B, and 130C having the index values in the memory 151 (S33).

The controller 152 compares the stored power emission values (S35), and outputs a control signal to a first and a second path controller 120 and 140. The control signal provides information for selection of an antenna matching unit, such as 130A, 130B, and/or 130C, in this exemplary example, to provide an optimal power emission value for the antenna 110 of the mobile terminal. The optimal power emission value may be the greatest power emission value or a user defined power emission value based on a selected criteria.

A first and second path controllers 120 and 140 connect selectively at least one of the antenna matching units for producing the optimal emission power value between the antenna and the internal circuit unit associated with the control signal (S37). The first path controller 120 connects the selected antenna matching unit to the antenna 110. The second path controller 140 connects the selected antenna matching unit to the internal circuit unit 150.

The controller 152 checks whether a selected time has elapsed based on when the selected antenna matching unit, such as 130A, 130B, and 130C, was selected and connected to the antenna (S39). When the selected time has elapsed, the controller 152 repeatedly sequentially measures power emission values of the antenna 110 to which the selected antenna matching units have been connected. If the selected time has not elapsed, the controller 152 continuously connects the selected antenna matching units. The selected time is preferably set to approximately one minute.

The present invention provides an apparatus for measuring power emission values of the antenna for selecting and connecting at least one of the antenna matching units 130A, 130B, and 130C. The emission power measurement occurs within a selected time of at least one of the antenna matching units 130A, 130B, and 130C selectively connected to the antenna 110 and an internal circuit unit 150. The emission power performance of the antenna 110 can be optimized based on the circumstances or the changes in circumstances of the mobile communication terminal.

Although the present invention is described in the context of a mobile terminal, the present invention may also be used in any wired or wireless communication systems using mobile devices, such as PDAs and laptop computers equipped with wired and wireless communication capabilities. Moreover, the use of certain terms to describe the present invention should not limit the scope of the present invention to certain type of wireless communication system, such as UMTS. The present invention is also applicable to other wireless communication systems using different air interfaces and/or physical layers, for example, TDMA, CDMA, FDMA, WCDMA, etc.

Code in the computer readable medium is accessed and executed by a processor. The code in which preferred embodiments are implemented may further be accessible through a transmission media or from a file server over a network. In such cases, the article of manufacture in which the code is implemented may comprise a transmission media, such as a network transmission line, wireless transmission media, signals propagating through space, radio waves, infrared signals, etc. Of course, those skilled in the art will recognize that many modifications may be made to this configuration without departing from the scope of the present invention, and that the article of manufacture may comprise any information bearing medium known in the art.

The logic implementation shown in the figures described specific operations as occurring in a particular order. In alternative implementations, certain of the logic operations may be performed in a different order, modified or removed and still implement preferred embodiments of the present invention. Moreover, steps may be added to the above described logic and still conform to implementations of the invention.

The foregoing embodiments and advantages are merely exemplary and are not to be construed as limiting the present invention. The present teaching can be readily applied to other types of systems. The description of the present invention is intended to be illustrative, and not to limit the scope of the claims. Many alternatives, modifications, and variations will be apparent to those skilled in the art. Accordingly, the invention is not limited to the precise embodiments described in detail hereinabove.

## Claims

1. An apparatus for matching an antenna of a mobile communication terminal, the apparatus comprising:
antenna matching units for connecting to the antenna; and
a path controller connecting at least one of the antenna matching units between the antenna and an internal circuit unit for measuring power emission values of the antenna with the at least one of the antenna matching units,
wherein the path controller selects from the at least one of the antenna matching units for connecting to the antenna based on an optimal power emission value of the measured power emission values for matching the antenna.

2. The apparatus of claim 1, further comprising:
an antenna coupler for measuring the power emission values of the antenna utilizing the at least one of the antenna matching units.

3. The apparatus of claim 2, wherein the internal circuit unit comprises:
a controller for outputting a control signal to selectively connect at least one of the antenna matching units associated with the measured power emission values to the antenna.

4. The apparatus of claim 3, wherein the internal circuit unit further comprises:
memory for storing the measured power emission values.

5. The apparatus of claim 4, wherein the internal circuit unit further comprises:
index values corresponding to the antenna and the at least one of the antenna matching units are set which are associated with the measured power emission values.

6. The apparatus of claim 5, wherein the path controller sets the index values of the at least one of the antenna matching units corresponding to the measured power emission values.

7. The apparatus of claim 1, wherein the path controller comprises a first path controller for selectively connecting the antenna and the at least one of the antenna matching units.

8. The apparatus of claim 1, wherein the path controller includes a second path controller for selectively connecting the at least one of the antenna matching units and the internal circuit unit.

9. A method for decreasing a voltage standing wave ratio of a match network between an antenna of a mobile communication terminal and a communication signal, the method comprising:
measuring power emission values of the antenna to which at least one of antenna matching units has been connected;
storing the measured power emission values;
comparing the stored measured power emission values relative to each other for determining at least one optimal antenna matching unit based on an optimal power emission value of the measured power emission values; and
connecting the at least one optimal antenna matching unit between the antenna and an internal circuit unit.

10. The method of claim 9, wherein the optimal power emission value is the greatest power emission value of the antenna.

11. The method of claim 9, further comprising:
setting index values of the antenna matching units corresponding to the measured power emission power values of the antenna matching units.

12. The method of claim 9, wherein storing the measured power emission values of the antenna further comprises:
associating the measured power emission power values with corresponding index values of the antenna matching units.

13. The method of claim 9, wherein connecting at least one of the antenna matching units further comprises determining an antenna matching unit having an optimal power emission value.

14. The method of claim 9, further comprising:
determining if a selected time has elapsed when the at least one of the antenna matching units is connected to the antenna.

15. The method of claim 9, further comprising:
determining repeatedly if a selected time has elapsed for at least one of the antenna matching units being connected to the antenna.

16. The method of claim 14, wherein the selected time is approximately one minute.

17. The method of claim 14, further comprising:
determining if the selected time has not elapsed and continuously connecting at least one of the antenna matching units to the antenna while the selected time has not elapsed.

18. An apparatus for matching an antenna of a mobile communication terminal, the apparatus comprising:
antenna matching units for connecting to the antenna;
a path controller for connecting at least one of the antenna matching units to the antenna and to an internal circuit unit; and
an antenna coupler for measurement of power emission values of the antenna utilizing the antenna matching units,
wherein the internal circuit unit comprises a controller for outputting a control signal for connecting the antenna matching units associated with the measured power emission values, and
wherein the path controller connects the at least one of the antenna matching units and the antenna associated with an optimal power emission value for matching the antenna.

19. The apparatus of claim 18, wherein the internal circuit unit further comprises:
memory for storing the measured power emission values.

20. The apparatus of claim 18, wherein the optimal power emission value is a greatest power emission value for the antenna.

21. The apparatus of claim 18, where the internal circuit further comprises:
index values corresponding to the antenna and the at least one of the antenna matching units being set based on the measured power emission values.

22. The apparatus of claim 18, wherein the path controller comprises a first path controller for connecting at least one of the antenna matching unit to the antenna.

23. The apparatus of claim 18, wherein the path controller sets index values of the at least one of the antenna matching units corresponding to the measured power emission values.

24. The apparatus of claim 22, wherein the path controller comprises a second path controller for connecting at least one of the antenna matching units and the internal circuit unit.
